Europäisches Patentamt

European Patent Office

Office européen des brevets

(19)

(11) Veröffentlichungsnummer: **0 029 496**
**B1**

(12) # EUROPÄISCHE PATENTSCHRIFT

(45) Veröffentlichungstag der Patentschrift:
08.08.84

(21) Anmeldenummer: 80105998.1

(22) Anmeldetag: 03.10.80

(51) Int. Cl.³: **F 16 D 9/00,** F 16 D 3/18,
B 61 C 9/46

(54) **Zahnkupplung.**

(30) Priorität: **24.11.79 DE 2947389**

(43) Veröffentlichungstag der Anmeldung:
**03.06.81 Patentblatt 81/22**

(45) Bekanntmachung des Hinweises auf die Patenterteilung:
**08.08.84 Patentblatt 84/32**

(84) Benannte Vertragsstaaten:
**AT CH DE FR GB IT LI NL**

(56) Entgegenhaltungen:
**DE - A - 2 650 693**
**DE - C - 749 609**
**GB - A - 743 465**
**US - A - 2 592 309**
**US - A - 3 712 080**

(73) Patentinhaber: **Thyssen Industrie AG, Am Thyssenhaus 1, D-4300 Essen (DE)**

(72) Erfinder: **Piepenbreier, Ernst, Wintgenstrasse 15, D-4300 Essen (DE)**
Erfinder: **Girod, Hansjochen, Holthauser Höfe 14, D-4330 Mülheim (DE)**

(74) Vertreter: **Eberhard, Friedrich, Dr., Am Thyssenhaus 1, D-4300 Essen (DE)**

BUNDESDRUCKEREI BERLIN

## Beschreibung

Die Erfindung betrifft eine Zahnkupplung enthaltend eine Kupplungshülse mit Innenverzahnung und zwei in dieser mit einer Außenverzahnung spiegelbildlich steckende Kupplungsnaben, von denen mindestens die eine Kupplungsnabe unterhalb des Zahngrundes ihrer Zähne und an ihrer einen Stirnseite eine axiale Ringnut aufweist.

Eine derartige Zahnkupplung ist nach der US-A-3 712 080 aber auch dem Kupplungs-Atlas von A. Schalitz, 1975, A. G. T.-Verlag Georg Thum—Ludwigsburg, Seite 15, Bild 2.3-1 bekannt. Die axiale Ringnut dient bei jenen Konstruktionen dazu, eine Art Labyrinthdichtung zusammen mit einer in sie hineingreifenden Auskragung eines Flansches zu bilden. Der Flansch ist an der Kupplungshülse befestigt und schließt die Zahnkupplung nach außen hin gegen Schmiermittelverluste ab. Die Materialstärke zwischen der Ringnut und dem Zahngrund der Kupplungsnabe überträgt mit ausreichender Sicherheit das Höchstdrehmoment, das die Zähne belasten kann. Diese Kupplungen beinhalten somit keine Maßnahmen gegen Überlast, wie die Erfindung.

Demgegenüber behandelt die DE-A-2 650 693 eine Überlastkupplung in nicht spiegelbildlicher Anordnung, bei der der kraftübertragende Teil außer einer inneren Kerbverzahnung mit einer Buchse auf einer der Kupplungswellen sitzt und mit einer Außenverzahnung in die Kupplungshülse eingreift. Das Material dieses Teiles ist zwischen der Kerbverzahnung und der Buchse geschwächt, so daß dort ein Bruch senkrecht zu der Kupplungsachse erfolgen kann. Beim Bruch gleitet die eine Hälfte des Teiles mittels der Buchse auf der Welle und liegt auch noch axial gegen eine Druckplatte an, die auf der Welle angeordnet ist. Damit berühren die sich nunmehr unterschiedlich drehenden Hälften einander nicht. Eine derartige Kupplung ist vielteilig. Dies dürfte sich in den Herstellungskosten nachteilig auswirken.

Der Erfindung liegt die Aufgabe zugrunde, eine Zahnkupplung der eingangs genannten Art so auszubilden, daß sie bei verhältnismäßig geringem Platzbedarf Momente nur bis zu einer bestimmten Größe übertragen kann. Dementsprechend ist eine Sollbruchstelle vorzusehen. Die gebrochenen Teile sollen sich neutral verhalten, so daß eine Beschädigung der Kupplung unterbleibt, ohne daß dabei auf aufwendige Maßnahmen zurückgegriffen wird.

Die Erfindung besteht darin, daß diese eine Kupplungsnabe die axiale Ringnut der anderen Kupplungsnabe zugewandt trägt und an der ihrer anderen Stirnseite zugewandten Seite der Außenverzahnung eine zweite, radiale Ringnut besitzt, deren Grund zusammen mit dem Grund der axialen Ringnut eine zylindermantelförmige Fläche bestimmt, die kleiner als der tragende Querschnitt der Außenverzahnung ist, und daß die Kupplungshülse einteilig ist und einen zwischen den Außenverzahnungen der beiden Kupplungsnaben mit geringem axialem Spiel angeordneten Spreizring trägt, so daß der bei Momentüberlast abbrechende, die Verzahnung tragende Teil der Kupplungsnabe an seiner ursprünglichen Eingriffstelle, d. h. in der Kupplungshülse verbleibt.

Nach dem deutschen Gebrauchsmuster 7 725 998 ist zwar eine Zahnkupplung mit Momentbegrenzung bekannt, die axial nur ein geringes Baumaß hat. Die Momentbegrenzung besteht jedoch in dem Abbruch der Zähne, was durch Einkerbungen am Fuß jedes Zahnes hervorgerufen wird. Diese Maßnahme stellt zweifellos noch nicht die günstigste Lösung der Momentbegrenzung dar.

Bei der Erfindung dagegen genügt ein einziger radialer Einstich, um eine Sollbruchstelle für sämtliche Zähne zu schaffen. Dies kann, wenn die Zahnkupplung in spiegelbildlicher Anordnung zwei Kupplungsnaben aufweist, sowohl an der motorseitigen Kupplungshälfte als auch an der getriebeseitigen Kupplungshälfte angelegt werden. Der Einstich kann zusammen mit der Bearbeitung der Außenfläche der Nabe in einem Arbeitsgang hergestellt werden, wodurch Fertigungszeit und Aufwand sich in Anbetracht des Gesamtaufwandes kaum bemerkbar machen. Der Platzbedarf bleibt gegenüber Zahnkupplungen gleicher Bauart aber ohne Momentbegrenzung unverändert, so daß die Kupplung nach der Erfindung in ihrer Verwendung nicht beeinträchtigt wird. Da die Kupplungsnabe in Umfangsrichtung gleichmäßig belastet wird, bricht die Außenverzahnung bei Überlast wie ein Kranz ab und bleibt innerhalb der Kupplungshülse, so daß keine herumfliegenden Bruchstücke die benachbarten Teile oder eine Verkleidung, wie Gehäuse, der Kupplung beschädigen können.

Der letztere Aspekt ist besonders wichtig, wenn eine Zahnkupplung als Verbindungsglied zwischen einem Elektromotor und dem Ritzel eines Achsgetriebes für Schienenfahrzeuge angeordnet ist. Hier wird vor allen Dingen verhindert, daß bei den Reaktionsmomenten, die über das Gehäuse des Achsgetriebes laufen, im Fahrzeug eine Havarie entsteht. Nach ringartigem Bruch der Außenverzahnung kann eine weitere Beschädigung nicht mehr erfolgen. Damit wäre eindeutig ein größerer Schaden abgewendet.

Im folgenden wird die Erfindung anhand eines in der Zeichnung schematisch dargestellten Ausführungsbeispiels näher beschrieben. Es zeigt

Fig. 1 ein Achsgetriebe für Schienenfahrzeuge in teilweise geschnittener Draufsicht und

Fig. 2 eine Zahnkupplung im Schnitt.

Mit 1 ist eine Zahnkupplung bezeichnet, die das Drehmoment eines Elektromotors 2 auf ein Ritzel 3 eines Achsgetriebes 4 für Schienenfahrzeuge überträgt. Der Elektromotor 2 schließt sich starr an einem Flansch 5 des Getriebegehäuses an, der in eine räumliche Erweiterung 6 zur Aufnahme der Zahnkupplung 1 übergeht. Diese ist somit allseitig von einem tragenden Teil des Motor-Getriebeaggregates umschlossen. Herkömmliche Sicherungen würden bei Sollbruch der Teile diese in dem engen Raum herumschleudern und dadurch das Getriebegehäuse ggf. zu Bruch bringen und die Motoraufhängung gefährden.

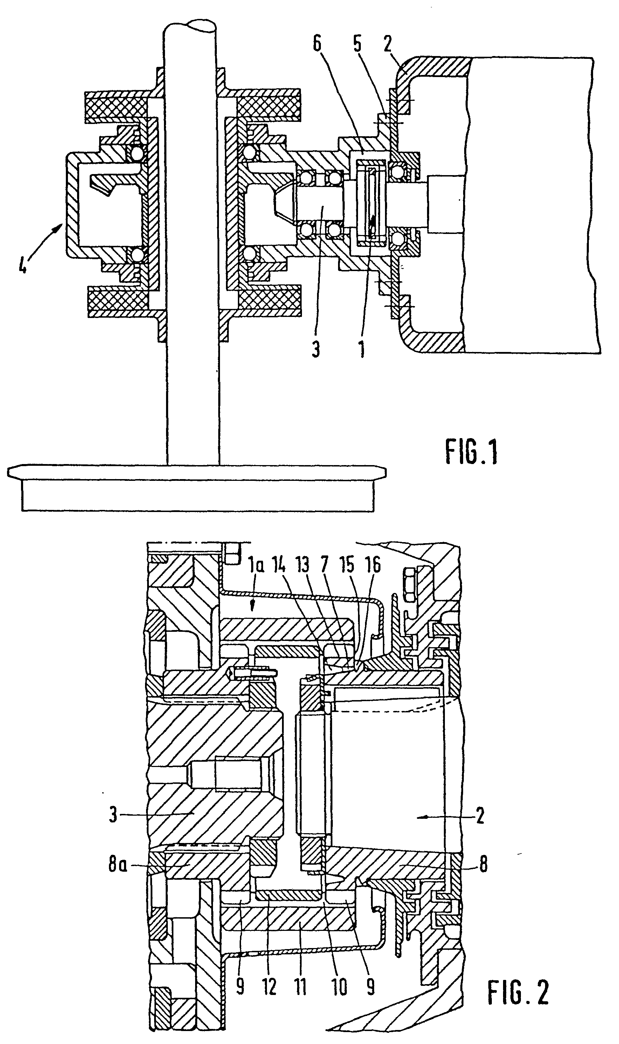

Die Zahnkupplung 1a vermeidet dies, wie in Fig. 2 anhand einer doppelnabigen Kupplung zu sehen ist, durch eine zylindrische Sollbruchstelle des Zahnkranzes bei 7. Der Zahnkranz bricht infolge der gleichmäßigen Umfangskraft in einem Stück ab und verbleibt innerhalb der Kupplung.

In Fig. 2 ist die motorseitige Kupplungsnabe mit 8 und die koaxiale ritzelseitige Kupplungsnabe mit 8a bezeichnet. Beide Kupplungsnaben haben eine Außenverzahnung 9, die einander zugekehrt sind und mit denen die Innenverzahnung 10 einer Kupplungshülse 11 ruhend kämmt. In dem Zwischenraum zwischen den Außenverzahnungen 9 ist ein Spreizring 12 in eine Ausnehmung der Innenverzahnung 10 eingesetzt, damit Axialbewegungen der Kupplungshülse 11 begrenzt sind. Dabei stößt der Spreizring 12 an der Stirn der Kupplungsnaben 8 und 8a an.

Die Kupplungsnabe 8 ist unterhalb des Zahngrundes 13 mit einer axialen Ringnut 14 versehen, die zu der Stirnseite der Außenverzahnung 9 hin offen ist. Auf der gegenüberliegenden Seite 15 der Außenverzahnung 9 befindet sich eine radiale Ringnut 16 bündig mit den Zahnenden. Diese Ringnut 16 reicht radial so tief, daß ihr Grund zusammen mit dem Grund der axialen Ringnut 14 eine zylindermantel-ähnliche Sollbruchstelle für den Zahnkranz bestimmt.

## Patentansprüche

1. Zahnkupplung (1a) enthaltend eine Kupplungshülse (11) mit Innenverzahnung (10) und zwei in dieser mit einer Außenverzahnung (9) spiegelbildlich steckende Kupplungsnaben (8, 8a), von denen mindestens die eine Kupplungsnabe (8) unterhalb des Zahngrundes (13) ihrer Zähne und an ihrer einen Stirnseite eine axiale Ringnut (14) aufweist, dadurch gekennzeichnet, daß diese eine Kupplungsnabe (8) die axiale Ringnut (14) der anderen Kupplungsnabe (8a) zugewandt trägt und an der ihrer anderen Stirnseite zugewandten Seite der Außenverzahnung (9) eine zweite, radiale Ringnut (16) besitzt, deren Grund zusammen mit dem Grund der axialen Ringnut (14) eine zylindermantelförmige Fläche bestimmt, die kleiner als der tragende Querschnitt der Außenverzahnung (9) ist, und daß die Kupplungshülse (11) einteilig ist und einen zwischen den Außenverzahnungen (9) der beiden Kupplungsnaben (8, 8a) mit geringem axialem Spiel angeordneten Spreizring (12) trägt, so daß der bei Momentüberlast abbrechende, die Verzahnung (9) tragende Teil der Kupplungsnabe (8) an seiner ursprünglichen Eingriffstelle, d. h. in der Kupplungshülse (11) verbleibt.

2. Zahnkupplung nach Anspruch 1, dadurch gekennzeichnet, daß sie als Verbindungsglied zwischen einem Elektromotor (2) und dem Ritzel (3) eines Achsgetriebes (4) für Schienenfahrzeuge angeordnet ist.

## Claims

1. Gear coupling (1a) comprising a coupling sleeve (11) with an internal tooth system (10), and two coupling hubs (8, 8a) which fit therein each with an external tooth system (9) in mirror-image arrangement, and of which at least one coupling hub (8) has an axial annular slot (14) below the root (13) of its teeth and one end face, characterised in that this same coupling hub (8) has the axial annular slot (14) facing towards the other coupling hub (8a), and comprises at that side of the external tooth system (9) which is directed towards its other end face a radial second annular slot (16) the bottom of which together with the bottom of the axial annular slot (14) define a cylindrical form surface which is smaller than the load-bearing cross-section of the external tooth system (9), and that the coupling sleeve (11) is made in one piece and comprises a spreader ring (12) arranged with a small amount of axial clearance between the external tooth systems (9).

2. Gear coupling according to claim 1, characterised in that it is arranged as a connecting unit between an electric motor (2) and the pinion (3) of an axle transmission (4) for rail vehicles.

## Revendications

1. Accouplement à dents (1a) contenant un manchon d'accouplement (11) pourvu d'une denture intérieure (10) et deux moyeux d'accouplement (8, 8a) qui s'engagent symétriquement dans celle-ci par une denture extérieure (9) et dont au moins un (8) présente une gorge annulaire axiale (14) au-dessous de la base (13) de ses dents et sur une de ses faces frontales, caractérisé par le fait que le même moyeu d'accouplement (8) porte la gorge annulaire axiale (14), dirigée vers l'autre moyeu d'accouplement (8a), et présente sur le côté de la denture extérieure (9) dirigé vers son autre face frontale, une deuxième gorge annulaire, radiale (16) dont le fond détermine avec le fond de la gorge annulaire axiale (14) une surface cylindrique qui est plus petite que la section transversale portante de la denture extérieure (9), et que le manchon d'accouplement (11) est d'une seule pièce et porte un anneau d'écartement (12) monté entre les dentures extérieures (9) avec un faible jeu axial.

2. Accouplement à dents selon la revendication 1, caractérisé par le fait qu'il est monté comme organe de liaison entre un moteur électrique (2) et le pignon (3) d'un engrenage d'essieu (4) pour véhicules sur rails.

FIG.1

FIG.2